# EUROPÄISCHE PATENTSCHRIFT

(11) **EP 2 632 590 B1**
(45) Veröffentlichungstag und Bekanntmachung des Hinweises auf die Patenterteilung: **04.03.2020**
(21) Anmeldenummer: 11771105.1
(22) Anmeldetag: 13.10.2011
(51) Int. Cl.: B01L 3/00

(54) **MIKROFLUIDISCHER TESTTRÄGER ZUM AUFTEILEN EINER FLÜSSIGKEITSMENGE IN TEILMENGEN**
MICROFLUIDIC TEST CARRIER FOR DIVIDING A LIQUID QUANTITY INTO SUBQUANTITIES
SUPPORT DE TEST MICROFLUIDIQUE POUR DIVISER UNE QUANTITÉ DE LIQUIDE EN QUANTITÉS PARTIELLES

(30) Priorität: 28.10.2010 EP 10189261
(43) Veröffentlichungstag der Anmeldung: 04.09.2013
(73) Patentinhaber: Roche Diagnostics GmbH, 68305 Mannheim (DE); F. Hoffmann-La Roche AG, 4070 Basel (CH)
(72) Erfinder: AUGSTEIN, Manfred, 68305 Mannheim (DE); BÖHM, Christoph, 68519 Viernheim (DE); WÜRL, Susanne, 68167 Mannheim (DE)
(74) Vertreter: Durm Patentanwälte PartG mbB
(86) Internationale Anmeldenummer: PCT/EP2011/067929
(87) Internationale Veröffentlichungsnummer: WO 2012/055707

(56) Entgegenhaltungen:
- EP-A1- 1 977 829
- EP-A2- 1 559 676
- WO-A1-2005/119211
- US-A- 4 154 793
- US-A- 5 061 381

## Beschreibung

Die vorliegende Erfindung betrifft einen mikrofluidischen Testträger zum Aufteilen einer Flüssigkeitsmenge in Teilmengen. Der Testträger umfasst ein Substrat und eine Deckschicht sowie eine von dem Substrat und der Deckschicht umschlossene Kapillarstruktur, die eine Aufnahmekammer, eine Probenkammer und einen Verbindungskanal zwischen der Aufnahmekammer und der Probenkammer umfasst. Die Aufnahmekammer hat zwei gegenüberliegende Begrenzungsflächen und eine Seitenwand, wobei die eine Begrenzungsfläche der Boden der Aufnahmekammer und die andere Begrenzungsfläche die Decke der Aufnahmekammer ist.

Mikrofluidische Elemente zum Analysieren einer Flüssigkeitsprobe werden in diagnostischen Tests der In-Vitro-Diagnostik eingesetzt. Bei diesen Tests werden Körperflüssigkeitsproben auf einen oder mehrere darin enthaltene Analyten für medizinische Zwecke untersucht. Ein wichtiger Bestandteil bei der Analyse sind Testträger, auf denen mikrofluidische Kanalstrukturen zur Aufnahme und Transport einer Flüssigkeitsprobe vorhanden sind, um die Durchführung aufwändiger und mehrstufiger Testführungen ("Testprotokolle") zu ermöglichen.

Testträger, die häufig als "Lab on a CD" oder "Lab on a chip" bezeichnet werden, bestehen aus einem Trägermaterial, das üblicherweise ein Substrat aus Kunststoff ist. Geeignete Materialien sind beispielsweise COC (Cyclo-Olephin-Copolymer) oder Kunststoffe wie PMMA (Polymethylmethacrylat), Polycarbonat oder Polystyrol. Die Testträger haben eine Kanalstruktur, die in dem Substrat ausgebildet ist und von einem Deckel oder einer Deckschicht umschlossen wird. Die Kanalstruktur besteht häufig aus einer Aufeinanderfolge mehrerer Kanäle und Kanalabschnitte sowie dazwischen liegender, im Vergleich zu den Kanälen und Kanalabschnitten erweiterten Kammern. Die Strukturen und Dimensionen der Kanalstrukturen werden durch die Strukturierung von Kunststoffteilen des Substrats definiert und können beispielsweise durch Spritzgießtechniken oder andere geeignete Verfahren hergestellt werden. Dazu zählen auch materialabtragende Verfahren, wie Fräsen oder Ähnliches.

Mikrofluidische Testträger werden unter anderem bei immunchemischen Analysen mit einem mehrstufigen Testablauf z. B. Enzyme-Iinked Immunosorbent Assay (ELISA) verwendet, bei dem beispielsweise eine Trennung von gebundenen oder freien Reaktionsbestandteilen stattfindet. Dazu ist ein gesteuerter Flüssigkeitstransport notwendig. Die Steuerung des Prozessablaufs kann mit internen (innerhalb des fluidischen Elements) oder mit externen (außerhalb des fluidischen Elements) Maßnahmen erfolgen. Die Steuerung kann auf der Anwendung von Druckunterschieden oder auf der Änderung von Kräften beruhen. Häufig werden dabei die Testträger rotiert, um Zentrifugalkräfte auszuüben, mit denen eine Steuerung durch Änderung der Rotationsgeschwindigkeit, der Drehrichtung oder der Beschleunigung vorgenommen wird. Oft wird auch eine Kombination aus Kapillar- und Zentrifugalkräften zur Steuerung der Fluidik verwandt.

Analysesysteme mit rotierenden Testträgern sind beispielsweise aus folgenden Publikationen bekannt:
EP 0 626 071 B1
WO 2007/042219 A1
WO 01/46465 A2
WO 95/33986
US 5,160,702
WO 93/19827

Ein Überblick über mikrofluidische Testelemente und Methoden, zu deren Steuerung, sowie über mikrofluidische Testelemente als rotierende Scheibe, beispielsweise in Form einer Compactdisc (CD), ist aus Marc Madou, et al.; Lab on CD; Annual Review of Biomedical Engineering, 2006.8, Page 601 to 628 (online@http://bioenc.annualreviews.org) bekannt.

Bei mikrofluidischen Testträgern befinden sich oft mehrere parallele Teilstrukturen auf einem Testträger, um in einem Prozessablauf unterschiedliche Analysen durchführen zu können. Um den Anwendern nicht abzuverlangen, dass eine Probenflüssigkeit mehrmals in kleinen Mengen aufgetragen werden muss, werden in den Testträgern Verteilstrukturen geschaffen, die Flüssigkeit in mehrere gleich große oder verschieden große Teilvolumina aufteilen. Diese Verteilstrukturen stellen außerdem sicher, dass nicht Effekte des Probenauftrags bzw. der Probennahme die Aussagekraft des Ergebnisses verfälschen. Für alle Analysen wird das gleiche Probenmaterial eingesetzt, was z.B. bei Mehrfachbestimmungen die Aussagekraft erhöht.

Im Stand der Technik sind beispielsweise aus der US 6,919,058 Verteilstrukturen bekannt, bei denen eine Flüssigkeit in einen langgestreckten Kanal aufgenommen wird, der in Form mehrerer hintereinander gereihter V-förmiger Strukturen ausgebildet ist. Die Verteilstruktur ist ringförmig auf einer Zentrifugationsplattform angeordnet. Am radial innen liegenden Ende der Schenkel der V-förmigen Struktur sind jeweils Lüftungskapillaren vorgesehen. Am radial außen liegenden Teil der V-förmigen Struktur sind Auslasskapillaren angeordnet, die mit einem hydrophoben Ventil ausgestattet sind. Es erfolgt also eine Vorverteilung der Flüssigkeit in den einzelnen V-förmigen Strukturen basierend auf Kapillarkräften. Eine derartige Verteilung ist jedoch sehr langsam. Nach Aufnahme der Flüssigkeit in der V-förmigen Verteilstruktur wird der Testträger beschleunigt rotiert, so dass die Flüssigkeit bei einer gewissen Frequenz den Hydrophob-Stopp durchbricht und durch die sich radial nach außen erstreckenden Auslasskapillaren an der Basis der V-förmigen Struktur abgeleitet wird. Die Flüssigkeit teilt sich zum Zeitpunkt des Ventildurchbruchs. Es erfolgt ein Auftrennen der vorverteilten Teilflüssigkeiten. Insbesondere durch die Architektur des radial innen liegenden Teils der Struktur werden die abgeleiteten Volumina vorgegeben. Sind die Strukturen gleich groß, sollten die abgeleiteten Volumina weitestgehend identisch sein.

Die EP1559676 offenbart eine mikrostrukturierte Anordnung zur blasenfreien Befüllung zumindest eines Systems zur Ableitung von Flüssigkeiten.

Die US 4,154,793 offenbart einen rotierenden Testträger mit einer zentralen Aufnahmeöffnung im Deckel. Unterhalb der Öffnung des Deckels ist ein Aufnahmeraum angeordnet, in dem Flüssigkeit gelagert wird. Um den Aufnahmeraum herum sind peripher mehrere Probenkammern angeordnet, die durch je einen Verbindungskanal mit dem Aufnahmeraum verbunden sind. Die Einlassöffnung für die Flüssigkeit in die Probenkammer erfolgt an einer radial außen liegenden Stelle. Zur Entlüftung der Probenkammer ist eine Auslassöffnung vorgesehen, die radial weiter innen liegt als die Einlassöffnung und die Probenkammer mit dem Aufnahmeraum verbinden. Durch Rotation des Testträgers wird die im Aufnahmeraum enthaltene Flüssigkeit in die einzelnen Probenkammern entleert, wobei die Luft aus den Probenkammern in den Aufnahmeraum radial nach innen strömt und letztlich durch die zentrale Öffnung im Deckel entweicht.

Die US 7,125,711 offenbart einen Testträger mit einem langgestreckten Verteilkanal, an den sich mehrere Messkammern anschließen, die kapillar befüllt werden. Jede Messkammer umfasst eine Teilmenge und hat einen Ausgang mit einem geometrischen Ventil. Durch Rotation des Testträgers erfolgt eine Entleerung der Teilmengen aus den Messkammern in eine Probenanalysekammer.

Die im Stand der Technik bekannten mikrofluidischen Verteilstrukturen zum Aufteilen einer Flüssigkeitsmenge in Teilvolumina sind insbesondere für kleine Volumina bis ca. 10 µl geeignet, da sich die Strukturen rein "passiv" durch Kapillarkräfte befüllen. Dies macht das System wiederum stark von den Fluideigenschaften der Probe abhängig, was zu Lasten der Robustheit geht. Bei größeren Volumina führt die Verteilung durch lang gezogene Verteilstrukturen zu einer deutlichen Verzögerung. Dies ist dadurch begründet, dass bei größer werdenden Volumina das Oberfläche zu Volumen-Verhältnis der Kapillaren immer ungünstiger wird, was wiederum in einer Verringerung der Kapillarkraft resultiert. In einigen Fällen kann die Befüllung der für die Teilmengen vorgesehen Kapillare und Teilmengenkammern sogar stoppen. Darüber hinaus besteht die Gefahr, dass bei größeren Volumina Luft in die Kapillare einströmt, was die Aufteilung verfälscht und zu abweichenden Volumina führt. Generell haben bei zum größten Teil kapillar arbeitenden Verteilsystemen konzeptbedingt Lufteinschlüsse und Schaumbildung große Einflüsse auf die Präzision der abgeleiteten Teilvolumina. Diese Empfindlichkeit kapillar arbeitender Verteilsysteme verringert die Robustheit der Prozesse (z. B. Analyseprozesse). Die mangelnde Robustheit muss durch äußere Faktoren kompensiert werden, z. B. durch den Einsatz automatisierter Verteilroboter. Deshalb sind diese bekannten Testträger nur für automatisierte Pipettierungen der Flüssigkeitsmengen geeignet. Eine manuelle Pipettierung durch unterschiedliche Anwender, die häufig unter Zeitdruck stattfindet, führt verstärkt zu (eingeschlossenen) Luftblasen und Schaumbildung beim Pipettieren. Die bekannten Testträger sind für eine manuelle Anwendung nicht geeignet. Da außerdem bei den hier genutzten Kapillareffekten die Oberflächeneigenschaften den Prozess dominieren, spielen Fertigungseffekte und Effekte in der Oberflächenbehandlung (z.B. Aktivierung, Hydrophilisierung) eine große Rolle. Auf Grund der engen Toleranzen erhöht dies den Herstell- und Prüfaufwand der Testträger in der Serienfertigung und kann außerdem zu hohen Ausschussquoten führen.

Es besteht im Stand der Technik deshalb weiterhin ein großer Bedarf, einen Testträger zu schaffen, mit dem eine zuverlässige Aufteilung einer Flüssigkeitsmenge in vorgegebene Teilmengen erfolgen kann. Ein derartiger Testträger soll nicht nur für ein automatisches Pipettieren und Zuführen der Flüssigkeitsmenge geeignet sein, sondern auch für eine manuelle Zuführung durch unterschiedliche Anwender und soll sich deshalb durch erhöhte Robustheit auszeichnen.

Gelöst wird das bestehende Problem durch einen mikrofluidischen Testträger zum Aufteilen einer Flüssigkeitsmenge in Teilmengen mit den Merkmalen des Anspruchs 1.

Der erfindungsgemäße mikrofluidische Testträger hat ein Substrat, in dem eine Kapillarstruktur ausgebildet ist. Die Kapillarstruktur wird von dem Substrat und einer Deckschicht umschlossen. Sie umfasst eine Aufnahmekammer zur Aufnahme einer Probenflüssigkeitsmenge, wenigstens eine Probenkammer, die ein Volumen aufweist, das kleiner als die Aufnahmekammer ist, und einen zwischen der Aufnahmekammer und der Probenkammer sich erstreckenden Verbindungskanal. Die Kombination aus Aufnahmekammer, Verbindungskanal und Probenkammer dient zur Aufteilung der Probenflüssigkeitsmenge in eine oder mehrere Teilmengen, die kleiner als die ursprüngliche Flüssigkeitsmenge sind.

Die Aufnahmekammer weist zwei gegenüberliegende Begrenzungsflächen und eine Seitenwand auf, wobei eine der Begrenzungsflächen der Boden der Aufnahmekammer und die andere Begrenzungsfläche die Decke der Aufnahmekammer ist. Die Kammer hat einen umlaufenden Entlüftungskanal und weist einen ebenfalls umlaufenden Damm auf, der zwischen dem Innenraum der Aufnahmekammer und dem Entlüftungskanal angeordnet ist. Dieser zwischen dem Entlüftungskanal der Aufnahmekammer positionierte Damm ist derart angeordnet und ausgebildet, dass er gemeinsam mit dem Entlüftungskanal ein geometrisches Ventil bildet. Das geometrische Ventil ist ein Kapillarstop für die Flüssigkeit, durch den aber Luft aus der Aufnahmekammer in den Entlüftungskanal entweichen kann. Das geometrische Ventil verhindert, dass sich die Probenflüssigkeit kapillar in die angeschlossenen Kanäle verteilt, ohne dass eine externe Kraft zur Steuerung der Flüssigkeitsbewegung oder - strömung auf die Flüssigkeit wirkt. Vorzugsweise liegt der Damm oben, so dass Luft aus der Kammer entweichen kann.

Erfindungsgemäß weist der Entlüftungskanal wenigstens eine Ausströmöffnung auf, die mit dem Verbindungskanal zwischen der Aufnahmekammer und der Probenkammer in Fluidverbindung steht und eine Verbindung zwischen der Ausströmöffnung des Entlüftungskanals und einer Einlassöffnung der Probenkammer schafft. Auf diese Weise kann Flüssigkeit aus der Aufnahmekammer in die Probenkammer transportiert werden, sobald die Flüssigkeit das durch den Damm und den Entlüftungskanal gebildete geometrische Ventil überwunden hat. Das Ventil öffnet, wenn eine genügend große Kraft auf die Flüssigkeit wirkt. Beispielsweise kann dies eine externe Kraft sein, die auf einer Beschleunigung oder Rotation beruht. Das geometrische Ventil kann z. B. beim Erreichen einer bestimmten Rotationsfrequenz eines rotierenden Testträgers überwunden werden. Der von dem geometrischen Ventil gebildete Kapillarstop ist derart gestaltet, dass ein selbsttätiger Fluidtransport aus der Aufnahmekammer, beispielsweise durch Kapillarkräfte, zuverlässig verhindert wird. Beim Öffnen des Ventils strömt die Flüssigkeit also aus dem Innenraum der Aufnahmekammer durch den Entlüftungskanal in den Verbindungskanal und dann in die Probenkammer.

Die Aufnahmekammer, der Entlüftungskanal und der Damm sind derart ausgebildet, dass der Innenraum der Aufnahmekammer radial am weitesten innen liegt. Betrachtet man das Testelement im Querschnitt, so erfolgt die Anordnung der drei Komponenten von radial innen nach außen derart, dass innen der Innenraum der Aufnahmekammer angeordnet ist, anschließend der umlaufende Damm und am weitesten außen (radial außen) der umlaufende Entlüftungskanal. Dabei liegen wenigstens Teilbereiche des Damms und des Entlüftungskanals in einer Ebene, die sich parallel zur Deckschicht des Testelements erstreckt. Der Damm bildet folglich eine Seitenwand des Entlüftungskanals.

Somit kann die Aufnahmekammer als Verteilkammer oder Verteilstruktur zunächst gefüllt werden. Dies geschieht vorzugsweise bei einem ruhenden mikrofluidischen Testträger. Die Robustheit des Systems wird durch die runde Ausgestaltung der Aufnahmekammer und vorzugsweise durch ein kleinstmögliches Oberflächen-Volumen-Verhältnis der Aufnahmekammer erhöht. Kapillarkräfte und die Oberflächenstruktur bzw. Oberflächenbehandlungen haben nur einen vernachlässigbaren Einfluss auf die Robustheit des Verteilsystems. Durch eine geeignete Wahl des Oberflächen-Volumen-Verhältnis der Kammer, bei dem die Kammer vorzugsweise möglichst hoch ist, kann auch bei einer zunächst ungleichen Verteilung beim Probenauftrag eine möglichst gleiche Verteilung der Flüssigkeit erzielt werden. Eine Vorverteilung, die auf Kapillarkräften beruht, wie es im Stand der Technik üblich ist, ist nicht notwendig. Die Güte der Verteilvolumina und die Gleichmäßigkeit der einzelnen Teilvolumina ist unabhängig von dem Probenauftrag. Somit kann eine hohe Probenauftragsgeschwindigkeit ermöglicht werden. Beim Befüllen der Aufnahmekammer kann eine Flüssigkeitsprobe sehr schnell in die Kammer einströmen. Derartige Aufnahmekammern eignen sich insbesondere für ein manuelles Pipettieren.

Außerdem stellt das sich entlang des Umfangs der Aufnahmekammer wenigstens teilweise oder abschnittsweise erstreckende geometrische Ventil sicher, dass die Verteilung der Probe in der Aufnahmekammer im Vergleich zu den oben beschriebenen Systemen des Stands der Technik nicht die Güte der Verteilvolumina beeinflusst. Erst durch Einwirken einer zusätzlichen Kraft zur Steuerung des Flüssigkeitstransports wird das geometrische Ventil überwunden und Flüssigkeit aus der Aufnahmekammer herausgeleitet. Durch diese Ausgestaltung erfolgt das Befüllen der Aufnahmekammer unabhängig von dem Verteilen der Gesamtflüssigkeitsmenge auf Teilmengen. Befüllen und Verteilen auf Teilvolumina sind vollständig entkoppelt.

Erfindungsgemäß erfolgt das Aufteilen der Flüssigkeit nicht durch Kapillarkräfte, sondern durch eine Steuerkraft, wie z. B. die Zentrifugalkraft. Die bei einer auf Kapillarkraft beruhenden Verteilung der Flüssigkeit auftretenden Probleme werden vermieden. Luftblasen werden durch ihre geringere Dichte bei der Zentrifugation nach radial innen geleitet. Die Flüssigkeitsprobe wird also während der Aliquotierung (Verteilung) aktiv entlüftet, so dass Lufteinschlüsse und Schaum den Prozess nicht beeinflussen können und somit eine dominierende Problematik des Stands der Technik umgangen wird. Der erfindungsgemäße Testträger ermöglicht deshalb eine Aufteilung einer Probenflüssigkeit, die störunanfällig und stabil ist und keine Abhängigkeiten von eventuellen Kontaminationen in Verteilstrukturen oder Abhängigkeiten von der Oberflächenbeschaffenheit der Verteilstrukturen aufweist.

In einer bevorzugten Ausführungsform ist der mikrofluidische Testträger eine rotierende Scheibe, beispielsweise eine Compaktdisc (CD)-ähnliche Scheibe, und rotiert um eine Rotationsachse, die sich bevorzugt durch den Testträger erstreckt. In einer bevorzugten Ausführungsform ist der Testträger derart ausgebildet, dass sich die Rotationsachse durch den Mittelpunkt oder den Schwerpunkt des Testträgers erstreckt.

Es hat sich als vorteilhaft für das Entleeren der Aufnahmekammer erwiesen, wenn sie in einer bevorzugten Ausführungsform so auf dem Testträger angeordnet ist, dass sich die Rotationsachse durch die Aufnahmekammer erstreckt. Durch Rotation des Testträgers wird eine Zentrifugalkraft erzeugt, die eine in der Aufnahmekammer befindliche Flüssigkeit radial nach außen drückt, so dass der umlaufende Damm und das von ihm gebildete geometrische Ventil überwunden wird und Flüssigkeit in den Entlüftungskanal strömen kann. Aus dem Entlüftungskanal strömt die Flüssigkeit dann durch den Verbindungskanal in die Probenkammer oder Portionierkammer und füllt diese.

Die erfindungsgemäße Ausgestaltung der Aufnahmekammer ermöglicht eine sehr schnelle Aufnahme der Probe. Da in der Praxis, insbesondere bei einer manuellen Befüllung durch den Benutzer, deutlich unterschiedliche Pipettiergeschwindigkeiten zu erwarten sind, ist hierdurch gewährleistet, dass es in keinem Fall zu einem Überlaufen des Probenports kommt. Ein Überlaufen würde in einer Verschmutzung der Testträgeroberfläche resultieren und kann besonders bei rotierenden Testträgern eine Verschmutzung des Gerätes nach sich ziehen. Außerdem besteht bei kleinen Volumina und langsamen Pipettierprozessen die Gefahr der Eintrocknung der Probe an den Grenzflächen. Die Möglichkeit, schnell zu pipettieren erhöht also weiterhin die Robustheit, Genauigkeit und Zuverlässigkeit des Testträgers.

In einer bevorzugten Ausführungsform ist die Aufnahmekammer derart gestaltet, dass ein möglichst kleines Oberflächen-Volumen-Verhältnis entsteht. Idealerweise wäre die Aufnahmekammer kugelartig ausgebildet, da hier das geringste Oberflächen-Volumen-Verhältnis existiert. Bei einem typischen Kammervolumen zwischen 100 µl und 200 µl, beispielsweise 160 µl, liegt das Oberflächen-Volumen-Verhältnis bei einem Wert von 0,9 mm²/mm³. Im Rahmen der Erfindung hat sich gezeigt, dass das Oberflächen-Volumen-Verhältnis der Aufnahmekammer einen Wert von höchstens 2,5 mm²/mm³, bevorzugt höchstens 2 mm²/mm³ aufweisen soll.

Eine der Begrenzungsflächen der Aufnahmekammer weist einen Einlassport zur externen Zugabe einer Flüssigkeitsprobe auf. Bevorzugt ist der Einlassport in der Decke der Aufnahmekammer angeordnet. Damit kann eine Zugabe der Flüssigkeitsprobe durch den Benutzer von oben erfolgen. Besteht die Decke des Testträgers, zumindest im Bereich der Aufnahmekammer, aus einem transparenten Material, so kann der Benutzer das Befüllen der Aufnahmekammer beobachten. Es findet eine optische Rückkopplung an den Benutzer während des Befüllens statt.

Im Hinblick auf ein verbessertes Befüllen der Aufnahmekammer hat es sich als vorteilhaft erwiesen, wenn vorzugsweise eine der Begrenzungsflächen der Aufnahmekammer gekrümmt ist. Dabei sind zwei unterschiedliche bevorzugte Ausführungsformen möglich. In der ersten Ausführungsform ist die gekrümmte Begrenzungsfläche der Aufnahmekammer die Decke. In der anderen Ausführungsform bildet die gekrümmte Begrenzungsfläche den Boden. Bevorzugt ist der Boden derart gekrümmt, dass er zum Rand der Aufnahmekammer hin ansteigt.

Bei dem erfindungsgemäßen mikrofluidischen Testträger mit einer Kapillarstruktur, die eine Aufnahmekammer, wenigstens eine Probenkammer und eine zwischen den Kammern angeordneten Verbindungskanal aufweist, lassen sich zwei Arten von Verteilung der Flüssigkeitsmenge in Teilmengen realisieren. Zum einen ist eine parallele Verteilung auf mehrere Probenkammern möglich; zum anderen eine serielle Verteilung der gesamten Flüssigkeitsprobenmenge auf mehrere Kammern.

Um eine parallele Verteilung der Flüssigkeitsmenge in mehrere Teilmengen zu erzielen, weist der Entlüftungskanal bevorzugt eine Mehrzahl von Ausströmöffnungen auf, die jeweils in Fluidverbindung mit einem Verbindungskanal stehen, der sich von der Aufnahmekammer zu jeweils einer Probenkammer erstreckt. In einer bevorzugten Ausführungsform sind die Ausströmöffnungen (Auslassports) äquidistant am Entlüftungskanal verteilt, so dass eine gleichmäßige Verteilung entlang des Umfangs des Entlüftungskanals erfolgt. Die einzelnen Probenkammern können gleiche oder unterschiedliche Volumina aufweisen, so dass die Gesamtflüssigkeitsmenge auf gleiche oder unterschiedliche Teilvolumina verteilt werden kann. Bei gleichen Volumina der Probenkammern erfolgt eine (absolut) gleichmäßige Aufteilung der Flüssigkeit, entweder bis alle Probenkammern gefüllt sind oder die Aufnahmekammer entleert ist. An die einzelnen Probenkammern können sich weitere Kanäle, Kammern oder kapillare Kanalstrukturen oder Leitungssysteme anschließen.

Bei einer seriellen Verteilung der Gesamtflüssigkeitsmenge auf Teilvolumina weist der Entlüftungskanal lediglich eine Ausströmöffnung (Auslassport) auf, so dass eine in dem Aufnahmekanal enthaltene Flüssigkeit durch die Ausströmöffnung und den sich daran anschließenden Verbindungskanal in eine erste Probenkammer strömt. Die erste Probenkammer ist durch einen Auslasskanal mit wenigstens einer weiteren Kammer verbunden, so dass durch eine Auslassöffnung der Probenkammer Flüssigkeit aus der Probenkammer in den Auslasskanal fließen kann. Diese Kammer kann beispielsweise ebenfalls eine Probenkammer sein. Es ist jedoch auch möglich, dass diese weitere Fluidkammer eine Abfallkammer (Waste-Kammer) ist, in der überschüssiges Fluid gesammelt wird. Auf diese Weise lässt sich das Gesamtprobenvolumen auf mehrere hintereinander angeordnete Probenkammern aufteilen. Selbstverständlich können sich an eine oder mehrere der Probenkammern weitere (zusätzliche) Kanäle, Kammern oder kapillare Leitungssysteme anschließen oder parallel angeordnet sein.

Die Erfindung wird nachfolgend anhand von in den Figuren dargestellten besonderen Ausführungsformen näher erläutert. Die dort dargestellten Besonderheiten können einzeln oder in Kombination verwendet werden, um bevorzugte Ausgestaltungen der Erfindung zu schaffen. Die beschriebenen Ausführungen zeigen beispielhaft rotierende Testträger in Form einer runden Scheibe und dienen zur Erläuterung der Erfindung und der besonderen Merkmale. Die Ausführungsformen stellen keine Einschränkung der durch die Ansprüche in ihrer Allgemeinheit definierten Erfindung dar. Es zeigen:
- Figur 1: eine Prinzipskizze eines mikrofluidischen Testträgers und drei Probenkammern, die fluidisch hintereinandergeschaltet sind;
- Figur 2: eine Detailansicht einer Aufnahmekammer aus dem Testträger aus Figur 1;
- Figur 3a, b: zwei Querschnitte durch den Testträger aus Figur 1;
- Figur 4a-c: je eine Teilansicht des Testträgers aus Figur 1 zur Erläuterung des Befüllens und Verteilens;
- Figur 5: eine alternative Ausführungsform eines Testträgers zur parallelen Verteilung einer Flüssigkeitsprobe auf mehrere Probenkammern;
- Figur 6: eine Detailansicht der Aufnahmekammer des Testträgers aus Figur 5;
- Figur 7: einen Schnitt durch die Aufnahmekammer aus Figur 6;
- Figur 8: eine perspektivische Zeichnung der Aufnahmekammer aus Figur 6;
- Figur 9: eine perspektivische Schnittzeichnung der Aufnahmekammer aus Figur 6;
- Figur 10: eine Prinzipskizze zur Befüllung und Verteilung einer Flüssigkeit in dem Testträger aus Figur 5.

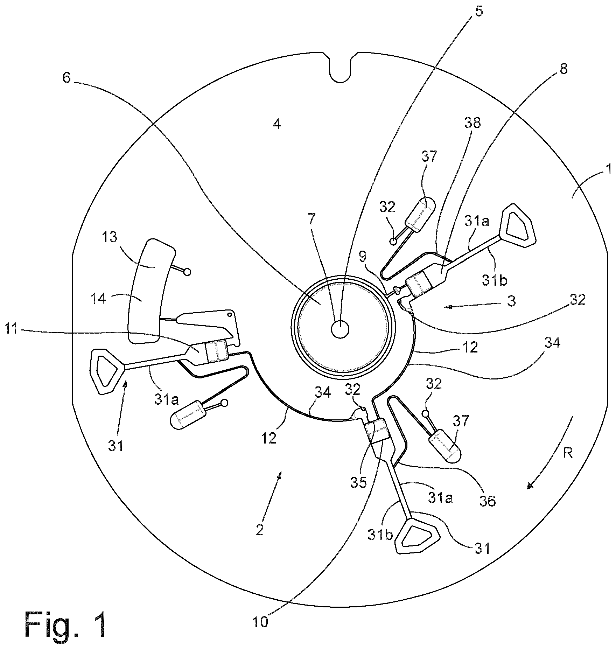

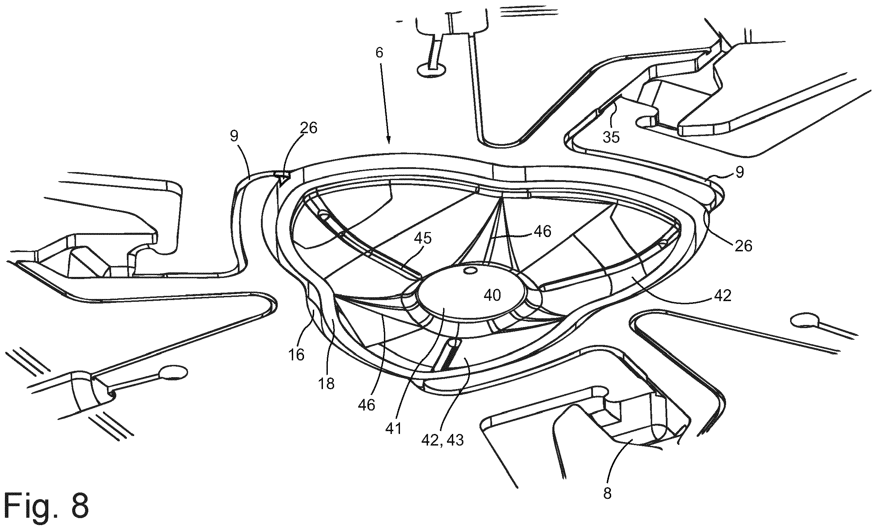

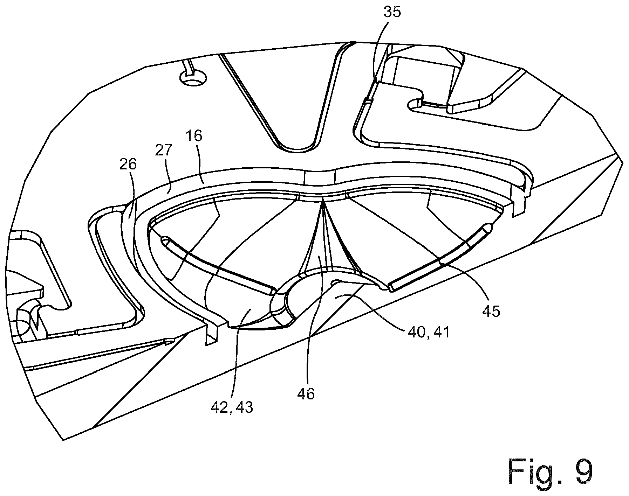

Die Figuren 1 bis 10 zeigen Ausführungsformen eines erfindungsgemäßen mikrofluidischen Testträgers 1, der ein Leitungssystem 2 mit einer kapillaren Kanalstruktur 3 umfasst. Die Kanalstruktur 3 ist in einem Substrat 4 aus Kunststoff ausgebildet. Vorzugsweise wird die Kapillarstruktur 3 durch Spritzgusstechnik oder durch materialabhebende Verfahren aus dem Substrat hergestellt. Der Testträger 1 umfasst weiter eine in Figur 1 nicht dargestellte Deckschicht, die auf dem Substrat 4 derart aufliegt, dass die Kanalstruktur 3 von dem Substrat 4 und der Deckschicht umschlossen ist.

In einer bevorzugten Ausführungsform ist der Testträger 1 ein rotierender Testträger 1, der um eine Rotationsachse 5 rotiert. Der Testträger 1 ist in Form einer dünnen Scheibe ausgebildet, beispielsweise in Form einer CD. Er wird in einer Rotationsvorrichtung gehalten, die eine Drehwelle aufweist, die mit der Rotationsachse 5 fluchtet. In einer bevorzugten Ausführungsform erstreckt sich die Rotationsachse 5 durch den Testträger 1, bevorzugt durch seinen Mittelpunkt oder seinen Schwerpunkt.

Die Kapillarstruktur 3 umfasst eine Aufnahmekammer 6 mit einem Einlassport 7, durch den eine Flüssigkeitsprobe bzw. eine Flüssigkeitsmenge in die Aufnahmekammer 6 gegeben werden kann. Die Zugabe der Flüssigkeitsprobe erfolgt beispielsweise durch manuelles oder automatisiertes Pipettieren. Die hier beispielhaft gezeigte Aufnahmekammer 6 weist ein Volumen von 160 µl auf. In dieser bevorzugten Ausführungsform beträgt das Oberflächen-Volumen-Verhältnis etwa 1,8 mm²/mm³ und liegt damit unter dem bevorzugten Wert von 2,5 mm²/mm³ bzw. 2,0 mm²/mm³. Eine derart ausgestaltete Aufnahmekammer 6 ermöglicht zuverlässig ein schnelles Pipettieren, so dass das Pipettieren auch manuell erfolgen kann.

Die Kanalstruktur 3 umfasst auch wenigstens eine Probenkammer 8 und einen Verbindungskanal 9, der sich zwischen der Aufnahmekammer 6 und der Probenkammer 8 erstreckt und eine Fluidverbindung zwischen den beiden Kammern 6, 8 herstellt. Der Verbindungskanal 9 ist als relativ kurzer Kanal ausgebildet. Bevorzugt hat der Verbindungskanal 9 eine Länge zwischen 1 mm und 5 mm, besonders bevorzugt zwischen 2 mm und 3 mm. In dem hier gezeigten Beispiel ist die Länge des Verbindungskanals 9 gleich 2,7 mm. Der Querschnitt dieses Kanals liegt vorzugsweise im Bereich zwischen 0,01 mm² bis 0,25 mm². Typische Werte sind beispielsweise 0,09 mm². Der hier gezeigte Kanal hat beispielsweise eine Breite von 0,2 mm und eine Höhe von 0,15 mm. Sein Querschnitt beträgt folglich 0,03 mm². Die Dimension des Verbindungskanals 9 hat Einfluss auf das vollständige Entleeren der Aufnahmekammer, das bevorzugt deutlich langsamer als ein gleichmäßiges Verteilen der Flüssigkeit in der Aufnahmekammer 6 erfolgen soll. In dem hier gezeigten Beispiel ist die Dauer des vollständigen Entleerens der Aufnahmekammer 6 ca. sechs Mal größer als die Dauer für ein gleichmäßiges Verteilen der Flüssigkeit (Egalisieren) in der Aufnahmekammer 6. Das vollständige Entleeren dauert im vorliegenden Beispiel ca. 10 sec.

In den Figuren 1 - 4 ist eine beispielhafte Ausführungsform des Testträgers 1 mit einer Kapillarstruktur 3 mit drei Probenkammern 8, 10, 11 gezeigt. Die drei Probenkammern 8, 10, 11 sind hintereinander (seriell) geschaltet und jeweils durch einen Kanal 12 miteinander verbunden. Die drei Probenkammern 8, 10, 11 bilden eine fluidische Reihenschaltung oder Serienschaltung, so dass eine Flüssigkeit aus der Aufnahmekammer 6 zunächst in die Probenkammer 8 und von dort aus in die Probenkammer 10 und dann in die Probenkammer 11 fließen kann. An die letzte Probenkammer 11 schließt sich eine weitere Kammer 13 an, die als Waste-Kammer 14 ausgebildet ist und ein fluidisches Abfallreservoir für überschüssige Flüssigkeit bildet. Die Volumina aller Probenkammern 8, 10, 11 und der Waste-Kammer 14 zusammen sind bevorzugt in etwa so groß wie das Volumen der Aufnahmekammer 6, vorzugsweise etwas größer.

Die insgesamt drei Probenkammern 8, 10, 11, ermöglichen es, das in die Aufnahmekammer 6 hinein gegebene Flüssigkeitsvolumen auf insgesamt drei Teilmengen aufzuteilen, die durch die Geometrie der Probenkammern 8, 10, 11 bestimmt werden. Selbstverständlich können auch mehrere Probenkammern verwendet werden. Eine Ausführung mit zwei Probenkammern ist ebenfalls denkbar.

Die fluidisch seriell angeordneten Probenkammern 8, 10, 11 lassen eine Aufteilung eines (kleinen) Volumens einer Flüssigkeit zu, das geringer ist als das Gesamtvolumen der drei Probenkammern. Bei einem geringeren Volumen wird eine Flüssigkeit auf nur eine oder zwei Kammern aufgeteilt, da sich die Probenkammern 8, 10, 11 nacheinander füllen und eine nachfolgende Probenkammer 10 erst dann gefüllt wird, wenn die vorhergehende Probenkammer 8 komplett gefüllt ist. Somit ist es möglich, den gleichen Testträger für die Analyse von mehreren oder aber nur einem Parameter zu verwenden. Dies vereinfacht die Produktion erheblich, da nur eine Produktionsstrasse und nur ein Werkzeug zu Herstellung des Testträgers nötig sind, unabhängig davon, ob der Testträger als Single-Parameter- oder Multi-Parameter-Testräger vermarktet werden soll. Auch für den Kunden bietet diese Art der Probenverteilung große Vorteile, da für die Analyse eines Parameters nur 1/3 bzw. für die Analyse zweier Parameter 2/3 des Probenvolumens benötigt wird. Es kann aber jeweils der gleiche Testträger verwendet werden.

Die Aufnahmekammer 6 ist auf dem Testträger 1 bevorzugt derart angeordnet, dass sich die Rotationsachse 5 durch die Aufnahmekammer 6 erstreckt. Bevorzugt erstreckt sich die Rotationsachse durch den Einlassport 7, bevorzugt durch den Mittelpunkt des Einlassports 7 der Aufnahmekammer 6. Die Aufnahmekammer 6 kann derart in dem Testträger 1 angeordnet sein, dass sich die Rotationsachse 5 durch den Mittelpunkt oder den Schwerpunkt der Aufnahmekammer 6 erstreckt. In einer bevorzugten Ausführungsform, wie hier gezeigt, ist die Aufnahmekammer 6 exzentrisch zum Mittelpunkt des Testträgers 1 bzw. zu seinem Schwerpunkt angeordnet. Der Mittelpunkt der hier runden (kreisförmigen) Aufnahmekammer 6 liegt außerhalb des Mittelpunkts des Testträgers 1. Die Rotationsachse 5 erstreckt sich also nicht durch den Mittelpunkt der Aufnahmekammer 6. Der exzentrisch zur Aufnahmekammer 6 angeordnete Einlassport 7 ist konzentrisch zur Rotationsachse 5 angeordnet.

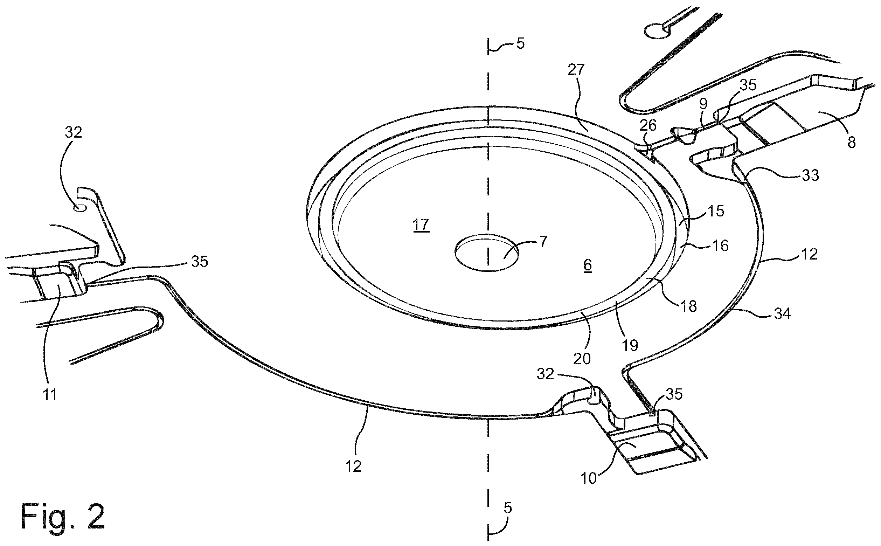

Figur 2 zeigt eine Detailzeichnung der Aufnahmekammer 6 in einer Ansicht auf die Unterseite. Der Einlassport 7 ist zentral im Testträger 1 und exzentrisch zum Mittelpunkt der Aufnahmekammer 6 angeordnet. Die Aufnahmekammer 6 weist einen umlaufenden Kanal 15 auf, der ein Entlüftungskanal 16 ist. Zwischen dem Innenraum 17 der Aufnahmekammer 6 und dem umlaufenden Entlüftungskanal 16 ist ein Damm 18 ausgebildet, der konzentrisch zum Entlüftungskanal 16 verläuft. Der Damm 18 und der Entlüftungskanal 16 sind wenigstens teilweise in einer Ebene angeordnet, deren Flächennormale sich parallel zur Rotationsachse erstreckt. Der Entlüftungskanal 16 hat eine radial innenliegende Seitenwand, die von dem Damm 18 gebildet wird, eine radial außenliegende Seitenwand 27, die die Außenwand der Aufnahmekammer 6 ist, und einen Boden, der im wesentlichen parallel zur Deckschicht 21 des Testelements angeordnet ist. Der Entlüftungskanal 16 kann eine konstante Breite und eine konstante Höhe über seinen gesamten Umfang haben. Er kann jedoch auch sich über den Umfang ändernde Dimensionen aufweisen, bevorzugt ist jedoch wenigstens seine Höhe konstant. Selbstverständlich können der Entlüftungskanal 16 und/oder der Damm 18 teilweise oder abschnittsweise unterbrochen sein. Insbesondere der Damm 18 kann in mehreren Abschnitten so unterbrochen sein, dass eine sich bis zur Decke der Aufnahmekammer erstreckende Seitenwand ausgebildet wird. Bevorzugt erstreckt sich der Damm und/oder der Entlüftungskanal über wenigstens 50 % des Umfangs der Aufnahmekammer 6, bevorzugt über wenigstens 80 % des Umfangs und besonders bevorzugt über wenigstens 90 % des Kammerumfangs. Bei unterbrochenem Entlüftungskanal 16 oder Damm 18 muss jedoch sichergestellt sein, dass die von ihnen gebildete geometrische Ventilfunktion erhalten bleibt.

Der Damm 18 wird durch eine Wand 19 gebildet, die eine Dicke (Dimension in radialer Richtung) hat, die bevorzugt der Breite des sich anschließenden Entlüftungskanals 16 entspricht. Die Höhe der Wand 19 ist geringer, als die Höhe der (radial außenliegenden) Seitenwand 27 des Entlüftungskanals 16, so dass zwischen der Deckschicht 21 des Testträgers 1 und der Oberseite 20 der Wand 19 ein Spalt 29 entsteht. Die Spalthöhe ist geringer als die Höhe des Entlüftungskanals 16.

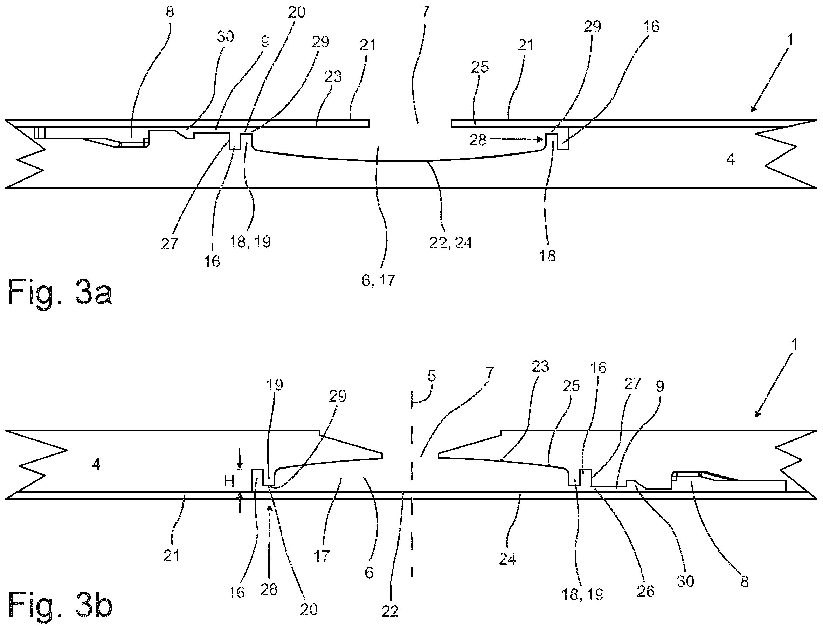

Die Figuren 3a und 3b zeigen je einen Schnitt durch den Testträger 1. Die Aufnahmekammer 6 weist zwei Begrenzungsflächen 22, 23 auf. Die Begrenzungsfläche 22 ist der Boden 24 der Aufnahmekammer 6, die gegenüberliegende Begrenzungsfläche 23 ist die Decke 25. In Figur 3a wird der Boden 24 durch das Substrat 4 gebildet. Die Begrenzungsfläche 23 wird durch die Deckschicht 21 gebildet, die auf dem Substrat 4 des Testträgers 1 aufliegt. In der Ausführungsform gemäß Figur 3b wird die Decke 25 von dem Substrat 4 gebildet, während der Boden 24 die das Substrat 4 kontaktierende Deckschicht 21 ist.

In einer bevorzugten Ausführungsform ist eine der Begrenzungsflächen 22, 23 der Aufnahmekammer 6 gekrümmt. Im vorliegenden Beispiel gemäß Figur 3b ist die von dem Substrat 4 gebildete Decke 25 gekrümmt. Die den Boden 24 bildende Begrenzungsfläche 22 ist eben. Die Decke 25 weist den trichterförmigen Einlassport 7 auf, durch den die aufzuteilende Flüssigkeitsmenge in die Aufnahmekammer 6 gegeben wird.

Figur 3a zeigt eine Ausführungsform, bei der der Boden 24 als gekrümmte Begrenzungsfläche 22 ausgebildet ist. Die plane Deckschicht 21 bildet die Decke 25 und weist den Einlassport 7 auf. Wenn die Deckschicht 21 als Decke 25 eine transparente Folie ist, so kann bei einer manuellen Pipettierung einer Flüssigkeit eine gute visuelle Rückkopplung über das schon in die Aufnahmekammer 6 dosierte Volumen erfolgen. Wird der Einlassport 7 im Substrat 4 gebildet, so ist ebenfalls eine visuelle Rückkopplung möglich, wenn das Substrat, zumindest im Bereich der Aufnahmekammer, transparent ist.

Die gekrümmte Ausführung einer Begrenzungsfläche 22, 23 weist den Vorteil auf, dass eintretende Luft entweder bei einer Krümmung der Decke 25 zum Einlassport 7 oder bei einer Krümmung des Bodens 24 zur Seitenwand des Innenraums 17 geleitet wird. Auf diese Weise ist sichergestellt, dass eindringende oder mit der Flüssigkeit pipettierte Luft aus der Aufnahmekammer 6 entweichen kann und nicht von der Flüssigkeit eingeschlossen wird, was zu einem Volumenfehler führen könnte.

Der Entlüftungskanal 16 weist bei einer fluidischen Serienschaltung der nachgeschalteten Probenkammern 8, 10, 11 genau eine Ausströmöffnung 26 auf. Sie ist bevorzugt an der Stelle der Entlüftungskanalseitenwand 27 angeordnet, die bei exzentrisch angeordneter Aufnahmekammer 6 am weitesten von der Rotationsachse 5 entfernt ist. In der gezeigten Ausführungsform, bei der die Rotationsachse 5 konzentrisch zu dem runden Einlassport 7 angeordnet ist, ist der Abstand zwischen der Ausströmöffnung 26 und dem Einlassport 7 der größte in der Kammer 6 vorhandene Abstand. Bei Rotation des Testträgers 1 wird die Flüssigkeit radial nach außen gedrängt und sammelt sich jedenfalls im Bereich um die Ausströmöffnung 26. Es wird so sichergestellt, dass die gesamte Flüssigkeit aus der Aufnahmekammer 6 austritt, da auch der letzte Rest zur Ausströmöffnung 26 gedrückt wird.

Der Damm 18 und der Entlüftungskanal 16 bilden gemeinsam ein geometrisches Ventil 28. Flüssigkeit, die aus der Aufnahmekammer 6 in die Probenkammer 8 fließen soll, muss durch das Ventil 28, also über den Damm 18 und durch den Entlüftungskanal 16, fließen, um durch den Verbindungskanal 9 in die Probenkammer 8 zu gelangen. Der zwischen der Oberseite 20 des Damms 18 und der gegenüberliegenden Begrenzungsfläche 22 gebildete Kapillarspalt 29 ist geringer als die Höhe des nachfolgenden Entlüftungskanals 16. Im vorliegenden Beispiel wird der Kapillarspalt 29 zwischen der Oberseite 20 und dem Boden 24 gebildet, wie in Figur 3a zu entnehmen ist.

Durch das geometrische Ventil 28 werden beim Befüllen der Aufnahmekammer 6 zunächst nur der Innenraum 17 und der Spalt 29 mit Flüssigkeit gefüllt. Flüssigkeit dringt jedoch nicht in den Entlüftungskanal 16 selbst ein. Damit kann die Aufnahmekammer 6 mit der zu verteilenden Probenflüssigkeit bzw. Flüssigkeitsmenge ganz oder teilweise gefüllt werden.

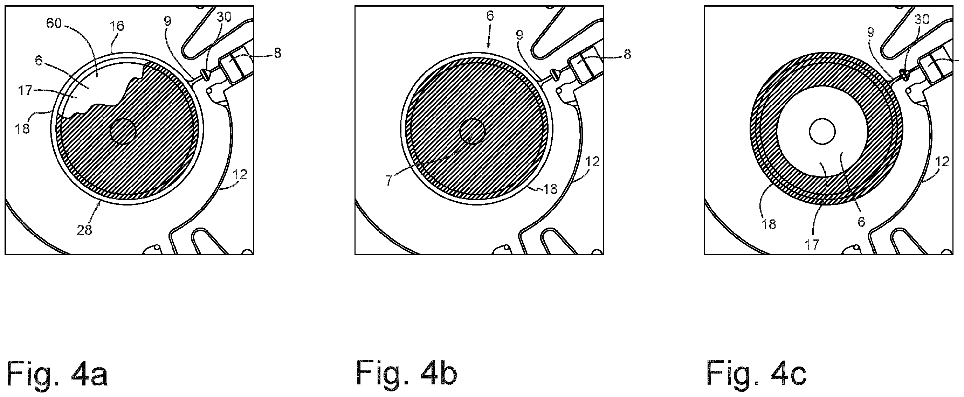

Figur 4a zeigt eine Teilbefüllung der Aufnahmekammer 6, während Figur 4b eine Komplettbefüllung darstellt. In der Aufnahmekammer 6 eingeschlossene Luft 60 kann durch das geometrische Ventil 28 hindurchtreten und über den Entlüftungskanal 16 in den nachfolgenden Verbindungskanal 9 entweichen, bis sie aus einer der Entlüftungsöffnungen 32 der nachfolgenden Probenkammern 8, 10, 11 in die Umgebung entweicht (vgl. Fig. 1).

Sobald der Testträger 1 in Rotation versetzt wird und die Rotationsfrequenz die durch die Geometrie des geometrischen Ventils 28 vorgegebene Durchbruchsfrequenz übersteigt, öffnet das geometrische Ventil 28. Flüssigkeit strömt aus der Aufnahmekammer 6 radial nach außen in den Entlüftungskanal 16. Aus diesem tritt die Flüssigkeit durch die Ausströmöffnung 26 in den Verbindungskanal 9, der in dem gezeigten Beispiel ein weiteres optionales geometrisches Ventil 30 aufweist. Auch dieses geometrische Ventil 30 wird durch die Zentrifugalkraft geöffnet, so dass Flüssigkeit in die erste Probenkammer 8 strömt, Fig. 4c.

Bei Rotation in Richtung des Pfeils R (Fig. 1) wird die Flüssigkeit nicht nur in den oberen Teil der Probenkammer 8 geleitet sondern auch in ihre steigbügelartige Kammerstruktur 31, wobei die Flüssigkeit an der Seitenwand 31a der Kammerstruktur 31 entlang bewegt wird, die der Rotationsrichtung entgegengesetzt ist. An der gegenüberliegenden Seitenwand 31b der Kammerstruktur 31 kann Luft aus der Struktur 31 in die Probekammer 8 strömen und durch eine Entlüftungsöffnung 32 entweichen. Sobald die Probenkammer 8 komplett gefüllt ist, gelangt Flüssigkeit durch eine Auslassöffnung 33 in den sich daran anschließenden Auslasskanal 34. Der Auslasskanal 34 ist seinerseits mit einer Einlassöffnung 35 der nachfolgenden Probenkammer 10 verbunden, so dass die Flüssigkeit in die Probenkammer 10 einfließen kann.

Da aus den einzelnen Probenkammern 8, 10, 11 durch deren Entlüftungsöffnungen 32 jeweils die in den Kammern enthaltene Luft in die Umgebung entweichen kann, steht einem Weiterfließen der Flüssigkeit von einer Probenkammer zur nächsten nur der Flusswiderstand der Auslasskanäle 34 entgegen. Der durch die Zentrifugalkraft aufgebaute Druck der Flüssigkeit beim Verlassen der Aufnahmekammer 6 ist deutlich größer als der Flusswiderstand. Die Aufnahmekammer 6 entleert sich deshalb komplett, wobei überschüssige Flüssigkeit aus der letzten Probenkammer 11 in die sich anschließende Waste-Kammer 14 strömt.

Die serielle Anordnung der drei Probenkammern 8, 10, 11 ermöglicht es, nicht nur das von den drei Kammern gebildete Gesamtvolumen zu verteilen. Es ist ebenso möglich, die Aufnahmekammer 6 nur mit einer Flüssigkeitsmenge zu füllen, die dem Volumen der beiden Probenkammern 8 und 10 sowie des Verbindungskanals 9 und des Auslasskanals 34 entspricht. In diesem Fall findet eine Verteilung bzw. Aufteilung oder Aliquotierung der Flüssigkeitsmenge auf nur zwei Probenkammern 8, 10 statt. Entspricht die Flüssigkeitsmenge in der Aufnahmekammer 6 nur dem Volumen einer Probenkammer 8, so erfolgt lediglich ein Befüllen der ersten Probenkammer 8. Die Kammern werden dabei stets komplett befüllt. Somit bildet das Volumen einer Probenkammer und das (im Wesentlichen vernachlässigbare) Volumen des Verbindungskanals 9 das Minimalvolumen für die Befüllung der Aufnahmekammer 6.

Weiterhin ist es möglich, die Aufnahmekammer 6 deutlich größer zu gestalten, als die Gesamtvolumen der drei Probenkammern 8, 10, 11. Dies ermöglicht dem Endanwender weitestgehend undosiert zu arbeiten. Mit anderen Worten: Egal, ob die Minimal-Menge, welche von den drei Probenkammern 8, 10, 11 benötigt wird, oder die Maximal-Menge, welche die Aufnahmekammer 6 komplett füllt, dosiert wird, die Sicherheit einer einwandfreien (fluidischen) Funktion der nachfolgenden Strukturen ist immer gewährleistet. Im vorliegenden Beispiel umfasst das Volumen jeder der drei identischen Probenkammern 8, 10, 11 je 30 µl. Die Gesamtaufnahmekapazität der Aufnahmekammer 6 beträgt 160 µl. Wird die Aufnahmekammer 6 mit mehr Flüssigkeit befüllt, als die drei Probenkammern 8, 10, 11 fassen, so wird die überschüssige Flüssigkeit in der Waste-Kammer 14 aufgenommen

Der erfindungsgemäße Testträger 1 hat den Vorteil, dass das Befüllen der von der Aufnahmekammer 6 gebildeten Verteilstruktur durch das geometrische Ventil 28 vollständig von der Aufteilung bzw. Verteilung der Flüssigkeit (Aliquotierung) entkoppelt ist. Eine zeitliche Limitierung beim Probenauftrag, also beim Befüllen der Aufnahmekammer 6, beispielsweise durch den Kunden, besteht nicht.

An die Aufnahmekammer 6 schließen sich optional zwei oder mehrere weitere Kammern an, wobei an diese wiederum Kammern anschließen können, um beispielsweise eine parallele Reaktionsführung zu ermöglichen. Diese Kammern können Separationskammern zur Trennung flüssiger und zellulärer Probenbestandteile, Reagenzkammern zum Lösen eines Reagenzes, Mischkammern, Wastekammern oder sonstige Kammern sein.

In der vorliegenden Ausführungsform erfolgt in der steigbügelartigen Kammerstruktur 31 der Probenkammern 8, 10, 11 bei der Untersuchung von Blut eine Trennung flüssiger und zellulärer Probenbestandteile. Es findet in der Kammerstruktur 31 also eine Separation statt. Auf diese Weise wird die Analyse des verbleibenden Blutplasmas in der Messkammer 37 ermöglicht.

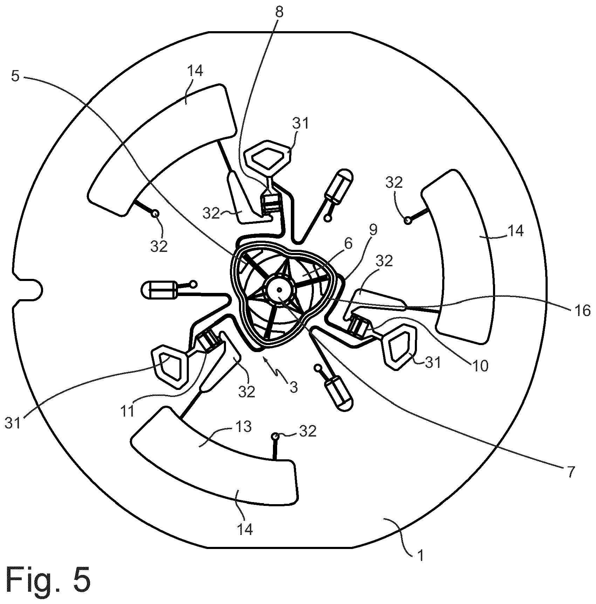

Die Figuren 5 bis 10 zeigen beispielhaft eine alternative Ausführungsform eines erfindungsgemäßen Testträgers 1 mit einer fluidischen Parallelschaltung von beispielsweise drei Probenkammern 8, 10, 11 statt der Reihenschaltung der Probenkammer 8, 10, 11 gemäß der Ausführungsform nach den Figuren 1 bis 4. In dieser Ausführungsform können auch zwei oder mehrere Probenkammern ausgebildet sein. Im Folgenden werden die wesentlichen Unterschiede erläutert:
Bei dieser parallelen Anordnung ist ebenfalls eine zentrale Aufnahmekammer 6 angeordnet, deren Mittelpunkt bzw. Schwerpunkt bevorzugt mit dem Mittelpunkt bzw. Schwerpunkt des Testträgers 1 identisch ist. Die Rotationsachse 5, um die der Testträger 1 rotiert, erstreckt sich bevorzugt durch den Mittelpunkt der Aufnahmekammer 6. In einer besonders bevorzugten Ausführungsform ist der Einlassport 7 der Aufnahmekammer 6 ebenfalls konzentrisch zur Rotationsachse 5.

In dieser Ausführungsform sind drei Probenkammern 8, 10, 11 mit einer steigbügelartigen Kanalstruktur 31 gezeigt, die fluidisch parallel geschaltet sind. Jede der Probenkammern 8, 10, 11 hat einen Verbindungskanal 9 zur Aufnahmekammer 6, der sich jeweils von einer Ausströmöffnung 26 des Entlüftungskanals 16 zu einer Einlassöffnung 35 der Probenkammer 8, 10, 11 erstreckt. Der Verbindungskanal 9 ist in dieser Ausführung S-förmig ausgebildet und deutlich länger als der Verbindungskanal 9 bei der seriellen Anordnung, wie sie in den Figuren 1 bis 4 gezeigt ist. Selbstverständlich könnte auch bei dieser parallelen Anordnung ein kurzer, sich radial nach außen erstreckender Verbindungskanal 9 verwendet werden. Ein S-förmiger Kanal 9 könnte auch bei der seriellen Ausgestaltung eingesetzt werden.

Die Länge des langen Verbindungskanals in diesem Beispiel ist typischerweise wenigstens 7 mm. Bevorzugt ist die Länge mindestens 9 mm, besonders bevorzugt mindestens 10 mm. Die S-förmige Ausgestaltung des langgestreckten Kanals hat den Vorteil, dass in radialer Richtung Platz eingespart wird. Darüber hinaus ermöglicht er einen möglichst geringen Radius beim Übergang in die Probenkammern und somit eine möglichst geringe Zentrifugalkraft an dieser Stelle. Dies wirkt sich positiv auf die Entleergeschwindigkeit aus, die möglichst gering sein soll, um eine gleichmäßige Entleerung der Aufnahmekammer 6 zu garantieren. Auch für diesen langen Kanal gelten die oben gemachten Aussagen über die Querschnitte. Der Querschnitt soll bevorzugt zwischen 0,01 und 0,25 mm² liegen. Im vorliegenden Beispiel hat der Verbindungskanal 9 an der Ausströmöffnung 26 einen Querschnitt von 0,09 mm² bei einer Breite von 0,3 mm und einer Höhe von 0,3 mm. An seinem Ende an der Einlassöffnung 35 ist der Verbindungskanal 9 verjüngt und weist eine Breite von 0,2 mm und eine Höhe von 0,15 mm auf. Sein Querschnitt beträgt also 0,03 mm². Mit einem derartigen Verbindungskanal ist es möglich, die Entleerdauer, die zur vollständigen Entleerung der Aufnahmekammer 6 benötigt wird, ca. drei bis vier Mal länger zu gestalten als die Dauer für ein gleichmäßiges Verteilen der Flüssigkeit in der Aufnahmekammer 6, was auch als Egalisieren bezeichnet wird. Bei der parallelen Ausgestaltung der Kapillarstruktur 3 beträgt die Dauer für ein Egalisieren 1,5 sec., wie auch bei der seriellen Ausgestaltung. Das vollständige Entleeren erfolgt bei paralleler Ausführungsform in etwa 5 sec.

Der Entlüftungskanal 16 bildet mit dem umlaufenden, radial innenliegenden Damm 18 ein geometrisches Ventil 28, das ein selbstständiges Ausströmen von Flüssigkeit, z. B. Blut verhindert. Erst wenn auch das Ventil 30 öffnet, kann die Flüssigkeit in die Probenkammern 8, 10, 11 fließen. Der Spalt 29 zwischen der Oberseite 20 und der Deckschicht 21 ist geringer als die Höhe des sich anschließenden Entlüftungskanals 16.

Die Probenkammern 8, 10, 11 weisen bevorzugt je eine Auslassöffnung 33 auf, durch die Flüssigkeit aus der Probenkammer 8, 10, 11 in den Auslasskanal 34 fließen kann. Am Ende des Auslasskanals 34 ist eine weitere Fluidkammer 13 mit einer Einlassöffnung 39 angeordnet, die mit der Probenkammer 8, 10, 11 in Fluidverbindung steht. Die Fluidkammer 13 ist bevorzugt eine Abfallkammer (Waste-Kammer) 14 und nimmt überschüssige Flüssigkeit auf. Die Probenkammern 8, 10, 11 haben jeweils ein Volumen von 30 µl, die Aufnahmekammer 6 ein Volumen von 160 µl. Das Flüssigkeitsvolumen aus der Aufnahmekammer 6 wird gleichmäßig auf die Probenkammern 8, 10, 11 verteilt, wobei die restliche Flüssigkeit in die jeweilige Waste-Kammer 14 fließt.

Die Aufnahmekammer 6 kann sowohl mit der Minimalfüllmenge, die der Summe aller Verbindungskanäle 9 und Probenkammern 8, 10, 11 entspricht, sowie auch komplett, was der Maximalfüllmenge entspricht, gefüllt werden. Hierbei ist sichergestellt, dass das komplette Volumen der Aufnahmekammer geringer als das Gesamtvolumen aller Proben- und Wastekammern ist. Natürlich kann die Aufnahmekammer 6 auch mit jeder beliebigen, zwischen Minimal- und Maximalfüllmenge liegenden Flüssigkeitsmenge gefüllt werden. Damit ergibt sich ein weiter Flüssigkeitsbereich für eine Flüssigkeitsanalyse, z. B. von Blut oder einer anderen Körperflüssigkeit. Dadurch lässt sich die Pipettierung und Zugabe von Flüssigkeit für den Benutzer, insbesondere bei einer manuellen Pipettierung, verbessern und die Handhabung erleichtern.

Bei der Parallelanordnung der Probenkammern 8, 10, 11, mit der eine gleichzeitige Aufteilung einer Flüssigkeitsmenge auf Teilmengen ermöglicht wird, weist der Entlüftungskanal 16 eine Mehrzahl von Ausströmöffnungen 26 auf, die in Fluidverbindung mit jeweils einem Verbindungskanal 9 stehen. Besonders bevorzugt sind die Ausströmöffnungen 26 über den Umfang des Entlüftungskanals 16 äquidistant, also gleichmäßig verteilt. Bevorzugt erstreckt sich der Entlüftungskanal 16 über den gesamten Umfang der Aufnahmekammer 6.

Dies gilt für den Kanal 16 in allen Ausführungsformen gemäß den Figuren 1 bis 10. Selbstverständlich ist es auch bei der Parallelanordnung wie schon bei der seriellen Anordnung möglich, dass der Damm 18 und/oder der Entlüftungskanal 16 abschnittsweise unterbrochen sind. Vorzugsweise liegt die Unterbrechung des Entlüftungskanals 16 jedoch nicht im Bereich der Ausströmöffnungen 26.

Im Rahmen der Erfindung wurde erkannt, dass bei der parallelen Verteilung des Flüssigkeitsvolumens der Flusswiderstand der durch die Verbindungskanäle 9 gebildeten Verteilkapillare als Steuerungsinstrument genutzt werden kann. Bei kurzen Verbindungskapillaren mit großem Querschnitt und somit schnellen Fließgeschwindigkeiten zerreißt die Flüssigkeitsprobe, d. h. sie hat keine Zeit sich gleichmäßig in der Aufnahmekammer zu verteilen, was zu ungleichen Volumen führt. Die erfindungsgemäße Integration langer Kanäle mit geringem Querschnitt, die über ihre Länge als Flussbremse wirken und den Verteilprozess verlangsamen, verbessert sich das gleichmäßige Verteilen in viele Teilsegmente, ohne dass eine gleichmäßige kapillare Vorverteilung notwendig ist. Die Integration der Verbindungskanäle erlaubt das Aliquotieren (Verteilen) bei hohen Frequenzen (gute Steuerbarkeit) und bei gleichzeitiger Unabhängigkeit von der Lage der Probe.

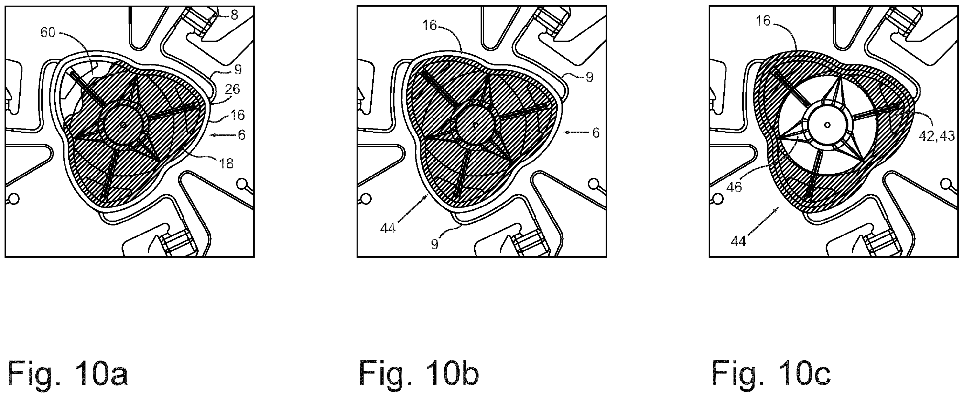

Die Zentrifugation startet und durch den Flusswiderstand in den Verbindungskanälen zwischen Aufnahme- und Probenkammer kann sich eine gleichmäßige Verteilung der Flüssigkeit in der Aufnahmekammer ausbilden (ohne dass die Flüssigkeit ungesteuert in die Probenkammern durchbricht). Die Flüssigkeit verteilt sich derart, dass sie zum Rand der Kammer hin strömt und sich am Kammerrand anordnet, während in der Kammermitte die Luft der Kammer positioniert ist (vgl. Fig. 10c). Diese sich in der Kammermitte ausbildende Luft wird in Fachkreisen auch als Meniskus bezeichnet. Der Meniskus, der sich konzentrisch um die Rotationsachse anordnet, führt zu einer sehr genauen Aliquotion und somit zu weitestgehend gleichen Volumina in den Probenkammern.

Im Gegensatz zu den bekannten Verteilstrukturen im Stand der Technik, bei denen die einzelnen Teilmengen in jeder Teilstruktur abhängig von der Lage der Flüssigkeit in der Aufnahmestruktur oder Verteilstruktur ist, ist die Verteilung der Flüssigkeit bei dem erfindungsgemäßen Testträger unabhängig von der Lage der Flüssigkeitsprobe in der Aufnahmekammer. Die erfindungsgemäße Ausgestaltung der Kanalstruktur ermöglicht deshalb eine sehr präzise Aufteilung der Flüssigkeitsmenge und vermeidet die im Stand der Technik auftretenden Ungenauigkeiten.

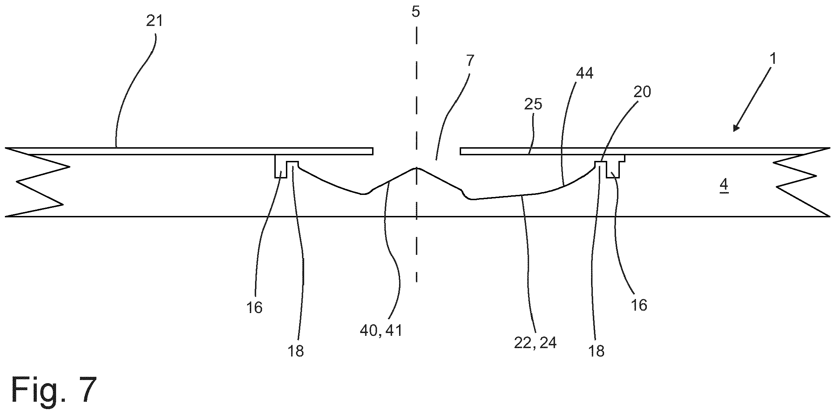

Die parallel ausgebildete Kapillarstruktur 3 ermöglicht eine gleichzeitige Aufteilung der Flüssigkeitsmenge auf die einzelnen Probenkammern 8, 10,11. Insbesondere bei In-Vitro-Analysen und Untersuchungen von Blut als Flüssigkeit stellt die gleichzeitige Verteilung sicher, dass gleiche Hämatokrit-Werte und gleiche lipämische Teile der Erythrozyten zu Plasma-Verhältnisse in allen parallelen Kammern erreicht werden. Vorzugsweise ist deshalb der Boden 24, der von dem Substrat 4 gebildet wird, gekrümmt. In Figur 7 ist gezeigt, dass die Decke 25 von der ebenen Deckschicht 21 gebildet wird und den runden Einlassport 7 aufweist. Der umlaufende Damm 18 und der umlaufende Entlüftungskanal 16 sind in diesem Falle nahe der Deckschicht 21 angeordnet. Sie sind konzentrisch angeordnet und liegen in einer Ebene, sich die im wesentlichen parallel zur Deckschicht 21 erstreckt. Bevorzugt steigt der gekrümmte Boden 24 der Aufnahmekammer 6 zum Damm 18 hin an. In die Aufnahmekammer 6 einströmende Flüssigkeit wird schon bei Stillstand des Testträgers 1 durch die entstehende Kapillarwirkung gezielt radial nach außen geleitet.

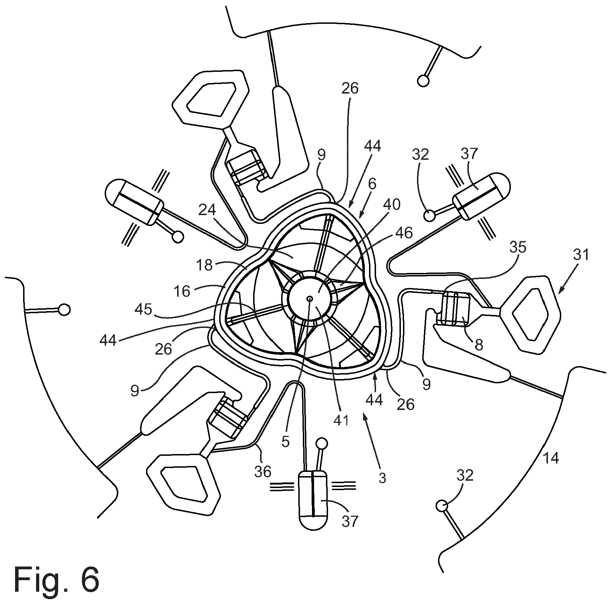

Bevorzugt wird der Flüssigkeitstransport in der Aufnahmekammer 6 durch eine (mittige) Erhebung 40 am Boden 24 unterstützt. Vorzugsweise ist die Erhebung kegelförmig ausgebildet, wie in den Figuren 6 bis 9 zu erkennen ist. Die kegelförmige Erhebung 40 ist bevorzugt ein Kegel 41 und ist bevorzugt gegenüber dem Einlassport 7 der Decke 25 angeordnet. Bevorzugt fluchtet die Spitze des Kegels 41 mit der Rotationsachse 5. Besonders bevorzugt kann die kegelförmige Erhebung 40 auch als Kegelstumpf ausgebildet sein. Alternativ kann die Erhebung auch in einer ganz anderen Form, z.B. in Form einer Halbkugel o. ä., ausgebildet sein.

Bei Pipettierung einer Flüssigkeit, beispielsweise von Blut, gelangt das Blut zwangsläufig auf den Kegel 41. Dieser beeinflusst durch die Reibung zwischen dem Blut und dem Substrat 4 des Testträgers 1 die Fließgeschwindigkeit beim Pipettieren und stellt sie mit ein. Gleichzeitig sorgt der Kegel 41 dafür, dass das Blut in der Mitte durch Adhäsion festgehalten wird. Der Rest der Probe fließt in Richtung des umlaufenden Damms 18 in das Umfeld des Kegels 41, was durch Kohäsion verstärkt wird. Der Kegel 41 stellt bei der Pipettierung also eine Flussbremse im Einlassport 7 dar, die zu einem gewissen Grad eine Normierung der Pipettiergeschwindigkeit erzeugt. Der Kegel 41 ruft eine Vergleichmäßigung von unterschiedlichen Untersuchungen hervor und unterstützt die Robustheit des Untersuchungssystems.

In einer bevorzugten Ausführungsform ist der Boden 24 der Aufnahmekammer 6 derart gewölbt, dass in einem Sammelbereich 42 nahe der Ausströmöffnung 26 eine Mulde 43 ausgebildet, in die Flüssigkeit hineinströmt und gesammelt wird. Bevorzugt ist vor jeder Ausströmöffnung 26 eine Mulde 43 ausgebildet. Bei drei Probenkammern 8, 10, 11 hat die Aufnahmekammer 6 drei Sammelbereiche 42 und drei Mulden 43.

Bei einer Ausführungsform, bei der die Decke 25 der Aufnahmekammer 6 gekrümmt ist, erfolgt die Krümmung bevorzugt derart, dass die Höhe am Einlassport 7 am größten ist. Dadurch strömt die Flüssigkeit nach Außen und wird gezielt von der Mitte der Kammer nach Außen geleitet (Flüssigkeit will eigentlich in der Mitte verbleiben, Kapillarwirkung nach außen nimmt jedoch zu).

Die Krümmung der Decke 25 verhindert den Verbleib von Luftblasen in der Kammer, die mit der durch den Einlassport 7 eindringenden Flüssigkeit in die Kammer gelangen und beispielsweise mitpipettiert werden. Die Luftblasen werden zum Rand geleitet und können dort durch das geometrische Ventil 28 in die nachfolgenden Kapillarstrukturen und durch deren Entlüftungsöffnungen entweichen.

Vorzugsweise weist die Aufnahmekammer 6 des Testträgers 1 eine seitliche Ausbuchtung 44 auf. Bevorzugt ist eine radial nach außen gerichtete Ausbuchtung 44 in jedem Sammelbereich 42 angeordnet. Die Aufnahmekammer 6 ist in ihrer Seitenwand, die durch die Entlüftungskanalseitenwand 27 gebildet wird, vom Mittelpunkt der Aufnahmekammer 6 wegerstreckend ausgebuchtet. Die Aufnahmekammer 6 weist in diesem Beispiel drei sich radial nach außen erstreckende Ausbuchtungen 44 auf, in denen jeweils die Ausströmöffnungen 26 angeordnet sind, an die sich die Verbindungskanäle 9 zu den Probenkammern 8, 10, 11 anschließen. Sobald der Testträger 1 in Rotation versetzt wird, wird die Flüssigkeit in die Ausbuchtungen 44 gedrückt und somit direkt zu den Ausströmöffnungen 26 geleitet.

Um das Einströmen der Flüssigkeit in die Aufnahmekammer 6 zu unterstützen und der Flüssigkeit bereits eine Vorzugsrichtung zu geben, weist die Aufnahmekammer jeweils eine Nut 45 im Boden 24 auf, die sich radial nach außen erstreckt. Die Nut 45 erstreckt sich vom Fuß des Kegels 41 zur Ausbuchtung 44. Die Nut 45 hat die Funktion, eine hydrophilisierende Lösung während des Herstellungsprozesses aufzunehmen, um eine Hydrophilisierung der Aufnahmekammer 6, die aus einem Substrat 4 aus hydrophobem Kunststoff besteht, zu erzielen. Es können auch andere Mittel oder geometrische Anordnungen zum Hydrophilisieren verwendet werden.

Durch die vor den Ausströmöffnungen 26 angeordneten Mulden 43, die sich in Richtung der Ausbuchtungen 44 erstrecken, weist die Aufnahmekammer 6 zwischen den einzelnen Mulden 43 sich radial erstreckende Erhöhungen 46 auf. Diese Ausbildung des Bodens 24 unterstützt eine gleichmäßige Aufteilung der Flüssigkeit auf die einzelnen Probenkammern 8, 10, 11.

In den Figuren 10a bis c ist das Befüllen der Aufnahmekammer 6 und das Aufteilen der Flüssigkeit aus der Aufnahmekammer 6 in die einzelnen Probenkammern 8, 10, 11 in drei Schritten gezeigt. Figur 10a zeigt, dass sich bei einer Teilbefüllung der Aufnahmekammer 6 zunächst eine Luftblase 60 bilden kann, die hier vor einer Ausströmöffnung 26 angeordnet ist. Die Luft kann durch den Entlüftungskanal 16 und eine der dort angeordneten Ausströmöffnungen 26 entweichen. Ein Weiterbefüllen der Kammer bis zur vollständigen Befüllung bleibt deshalb möglich (Figur 10b).

Figur 10c zeigt eine Teilentleerung der Aufnahmekammer 6, nachdem der Testträger 1 in Rotation versetzt wurde und die Rotationsfrequenz (Rotationsgeschwindigkeit) oberhalb der Durchbruchsfrequenz des aus Damm 18 und Entlüftungskanal 16 gebildeten Ventils 28 liegt. Ab dieser Rotationsgeschwindigkeit öffnet das Ventil 28 und Flüssigkeit strömt gleichmäßig durch die Ausströmöffnungen 26 in die angeschlossenen Verbindungskanäle 9. Die Flüssigkeit wird in die Ausbuchtungen 44 und in die in den Sammelbereichen 42 angeordneten Mulden 43 gedrückt. Wird die Aufnahmekammer 6 weiter entleert, so findet eine Separation der einzelnen Sammelbereiche 42 bzw. der in den einzelnen Sammelbereichen 42 gesammelten Flüssigkeit statt. Die Separation wird durch die Erhöhungen 46 (Grat) und die Ausbuchtung 44 unterstützt. Auf diese Weise erfolgt eine weitere Vergleichmäßigung der Aufteilung der Flüssigkeit in die einzelnen Probenkammern 8, 10, 11.

Die Separation der Flüssigkeitsmenge in der Aufnahmekammer 6 ist insbesondere dann vorteilhaft, wenn die Verbindungskanäle 9 einen unterschiedlich großen Querschnitt aufweisen. Mit abnehmender Flüssigkeitsmenge in der Aufnahmekammer 6 würde sonst ein Flüssigkeitskanal 9 mit einem größeren Querschnitt mehr Flüssigkeit aufnehmen und schneller abfließen lassen. Dies wird durch die Aufteilung der Flüssigkeit in erste Teilvolumina verhindert. Die getrennten Flüssigkeitsteilmengen können nur noch aus den zugeordneten Ausströmöffnungen 26 ausströmen. Es kann keine Flüssigkeit aus einer Mulde 43 in eine benachbarte Mulde 43 fließen.

Auch bei einer zunächst ungleichmäßigen Verteilung der Flüssigkeit in der Aufnahmekammer 6, beispielsweise bei Teilbefüllung der Aufnahmekammer 6, nivelliert sich die Flüssigkeit bei beginnender Rotation des Testträgers 1 und fließt radial nach außen zum Rand der Aufnahmekammer 6. Durch Ausgestaltung des umlaufenden Damms 18 in der Aufnahmekammer 6, insbesondere durch Gestaltung des Spalts 29, kann die Geschwindigkeit, mit der die Flüssigkeit aus der Aufnahmekammer 6 ausströmt, eingestellt werden.

Durch geeignete Ausgestaltung fließt die Flüssigkeit derart langsam aus der Aufnahmekammer 6 heraus, dass Luftblasen in der Aufnahmekammer 6 auch bei hohen Rotationsgeschwindigkeiten aus der Flüssigkeit verdrängt werden können und keine Volumenfehler hervorrufen. Dies gilt selbst dann, wenn die Luftblasen in der Flüssigkeitsprobe mitpipettiert werden. Entstehender Schaum kann ebenfalls zu keinem Volumenfehler bei der Aufteilung der Flüssigkeitsmenge führen, da er durch seine geringe Dichte gleichmäßig ins Innere der Kammer zum Einlassport verdrängt wird.

Der Abtransport der Flüssigkeiten erfolgt bei der parallelen Portionierung der Flüssigkeitsmenge sehr synchron. Die Aufteilung der Flüssigkeit in jede der Teilstrukturen mit Probenkammer ist nahezu identisch. Insbesondere Suspensionen und Emulsionen, die durch ihre charakteristischen Dichteunterschiede im Zentrifugalfeld kritisch sein können, lassen sich durch die parallele Aliquotierung exakt gleich aufteilen, so dass jede Probenkammer das gleiche Partikel-Flüssigkeits-Verhältnis bzw. den gleichen Anteil zellulärer Bestandteile aufweist. Hierdurch werden Suspensionen und Emulsionen bei gleichmäßigen Verhältnissen von Flüssigkeiten zu Feststoffen bzw. Flüssigkeit zu einer anderen Flüssigkeit verteilt. Gerade bei Blut führt das zu analogen Verhältnissen des Lipämischen-Anteils des Plasma-Anteils bzw. des Erythrozyten-Anteils.

## Patentansprüche

1. Mikrofluidischer Testträger zum Aufteilen einer Flüssigkeitsmenge in Teilmengen,
mit einem Substrat (4) und einer Deckschicht (21) und mit einer in dem Substrat (4) ausgebildeten Kapillarstruktur (3), die von dem Substrat (4) und der Deckschicht (21) umschlossen ist,
wobei
- die Kapillarstruktur (3) eine Aufnahmekammer (6), eine Probenkammer (8, 10, 11) und einen Verbindungskanal (9) zwischen der Aufnahmekammer (6) und der Probenkammer (8, 10, 11) umfasst,
die Aufnahmekammer (6) zwei gegenüberliegende Begrenzungsflächen (22, 23) und eine Seitenwand (27) aufweist, wobei eine der Begrenzungsflächen (22, 23) einen Einlassport (7) hat und die eine Begrenzungsfläche (22) der Boden (24) der Aufnahmekammer (6) und die andere Begrenzungsfläche (23) die Decke (25) der Aufnahmekammer (6) ist,
**dadurch gekennzeichnet, dass**
- die Aufnahmekammer (6) einen umlaufenden Entlüftungskanal (16) und einen umlaufenden Damm (18) aufweist, der zwischen der Aufnahmekammer (6) und dem Entlüftungskanal (16) angeordnet ist, wobei der Damm (18) durch eine Wand (19) gebildet wird und eine Seitenwand des Entlüftungskanals (16) bildet und näher am Einlassport (7) angeordnet ist als der Entlüftungskanal (16),
- der Damm (18) derart ausgebildet ist, dass die Höhe der Wand (19) geringer ist als die Höhe der radial außenliegenden Seitenwand (27) des Entlüftungskanals (16), so dass zwischen der Deckschicht (21) des Testträgers und der Oberseite (20) der Wand (19) ein Spalt (29) entstehet, dessen Spalthöhe geringer ist als die Höhe des Entlüftungskanals (16) und somit mit dem Entlüftungskanal (16) ein als geometrisches Ventil (28) ausgebildeter Kapillarstop gebildet wird, durch den Luft aus dem Entlüftungskanal (16) entweichen kann,
- sich der Verbindungskanal (9) zwischen einer Ausströmöffnung (26) des Entlüftungskanals (16) und einer Einlassöffnung (35) der Probenkammer (8, 10, 11) derart erstreckt, dass ein Flüssigkeitstransport von der Aufnahmekammer (6) in die Probenkammer (8, 10, 11) möglich ist und
- das Ventil (28) derart ausgebildet ist, dass ein selbständiger Fluidtransport aus der Aufnahmekammer (6) verhindert wird.

2. Mikrofluidischer Testträger nach Anspruch 1, **dadurch gekennzeichnet, dass** eine der Begrenzungsflächen (22, 23) der Aufnahmekammer (6) gekrümmt ist und bevorzugt die andere Begrenzungsfläche (22, 23) von der Deckschicht (21) gebildet wird.

3. Mikrofluidischer Testträger nach Anspruch 2, **dadurch gekennzeichnet, dass** die gekrümmte Begrenzungsfläche (23) die Decke (25) der Aufnahmekammer (6) ist.

4. Mikrofluidischer Testträger nach Anspruch 2, **dadurch gekennzeichnet, dass** die gekrümmte Begrenzungsfläche (22) der Boden (24) der Aufnahmekammer (6) ist und dass bevorzugt der Boden (24) derart gekrümmt ist, dass der Boden (24) zum Damm (18) der Aufnahmekammer (6) hin ansteigt.

5. Mikrofluidischer Testträger nach einem der vorhergehenden Ansprüche,
**dadurch gekennzeichnet, dass** der Testträger (1) um eine Rotationsachse (5) rotierbar ist, die sich durch den Testträger (1) erstreckt, bevorzugt durch den Mittelpunkt oder den Schwerpunkt des Testträgers (1).

6. Mikrofluidischer Testträger nach dem vorhergehenden Anspruch, **dadurch gekennzeichnet, dass** die Aufnahmekammer (6) so auf dem Testträger (1) angeordnet ist, dass sich die Rotationsachse (5) durch den Einlassport (7) erstreckt.

7. Mikrofluidischer Testträger nach Anspruch 5, **dadurch gekennzeichnet, dass** die Aufnahmekammer (6) derart in dem Testträger angeordnet ist, dass sich die Rotationsachse (5) durch den Mittelpunkt oder Schwerpunkt der Aufnahmekammer (6) erstreckt.

8. Mikrofluidischer Testträger nach Anspruch 5, **dadurch gekennzeichnet, dass** die Aufnahmekammer (6) exzentrisch zum Mittelpunkt des Testträgers (1) oder zum Schwerpunkt des Testträgers (1) angeordnet ist.

9. Mikrofluidischer Testträger nach einem der vorhergehenden Ansprüche, **dadurch gekennzeichnet, dass** der Boden (24) der Aufnahmekammer (6) derart gewölbt ist, dass in einem Sammelbereich (42) nahe der Ausströmöffnung (26) eine Mulde (43) ausgebildet ist, in die Flüssigkeit hineinströmt.

10. Mikrofluidischer Testträger nach einem der vorhergehenden Ansprüche, **dadurch gekennzeichnet, dass** in der Aufnahmekammer (6) am Boden (24) eine bevorzugt kegelförmige Erhebung (40) ausgebildet ist, die gegenüber dem Einlassport (7) in der Decke (25) angeordnet ist und bevorzugt mit der Rotationsachse (5) fluchtet.

11. Mikrofluidischer Testträger nach einem der vorhergehenden Ansprüche, **dadurch gekennzeichnet, dass** in dem Entlüftungskanal (16) eine Mehrzahl von Ausströmöffnungen (26) angeordnet sind, die in Fluidverbindung mit jeweils einem Verbindungskanal (9) stehen, der sich von der Aufnahmekammer (6) weg erstreckt, wobei die Ausströmöffnungen (26) bevorzugt über den Umfang äquidistant verteilt sind.

12. Mikrofluidischer Testträger nach einem der vorhergehenden Ansprüche,
**dadurch gekennzeichnet, dass** die Probenkammer (8, 10, 11) eine Auslassöffnung (33) aufweist, die mit einem Auslasskanal (34) derart in Fluidverbindung steht,
dass eine Flüssigkeit aus der Probenkammer (8, 10, 11) hinausfließen kann.

13. Mikrofluidischer Testträger nach dem vorhergehenden Anspruch,
**dadurch gekennzeichnet, dass** sich an den Auslasskanal (34) eine weitere Fluidkammer (38) mit einer Einlassöffnung (39) anschließt, die mit der Probenkammer (8, 10, 11) durch den Auslasskanal (34) in Fluidverbindung steht.

14. Mikrofluidischer Testträger nach einem der vorhergehenden Ansprüche,
**dadurch gekennzeichnet, dass** die Seitenwand eine Ausbuchtung (44) aufweist, die sich vom Mittelpunkt der Aufnahmekammer (6) wegerstreckt, und die Ausströmöffnung (26) in der Ausbuchtung (44) angeordnet ist.

## Claims

1. Microfluidic test carrier for apportioning a quantity of fluid into subquantities,
having a substrate (4) and a covering layer (21) and having a capillary structure (3) formed in the substrate (4) that is enclosed by the substrate (4) and the covering layer (21),
wherein
- the capillary structure (3) comprises a receiving chamber (6), a sample chamber (8, 10, 11) and a connecting channel (9) between the receiving chamber (6) and the sample chamber (8, 10, 11),
- the receiving chamber (6) has two opposite boundary surfaces (22, 23) and a side wall (27), wherein one of the boundary surfaces (22, 23) has an inlet port (7) and one of the boundary surfaces (22) is the floor (24) of the receiving chamber (6) and the other boundary surface (23) is the cover (25) of the receiving chamber (6),
**characterized in that**
- the receiving chamber (6) has a circumferential venting channel (16) and a circumferential dam (18) positioned between the receiving chamber (6) and the venting channel (16), wherein the dam (18) is formed by a wall (19) and forms a side wall of the venting channel (16) and is closer to the inlet port (7) than the venting channel (16),
- the dam (18) is designed such that the height of the wall (19) is less than the height of the radially outer side wall (27) of the venting channel (16) so that a gap (29) occurs between the covering layer (21) of the test carrier and the upper side (20) of the wall (19), the height of the gap being less than the height of the venting channel (16) so that a capillary stop forming a geometric valve (28) is formed with the venting channel (16) through which air can escape out of the venting channel (16),
- the connecting channel (9) extends between an outflow orifice (26) of the venting channel (16) and an inlet orifice (35) of the sample chamber (8, 10, 11) such that fluid transport is possible from the receiving chamber (6) into the sample chamber (8, 10, 11), and
- the valve (28) is designed such that automatic fluid transport out of the receiving chamber (6) is prevented.

2. Microfluidic test carrier according to claim 1, **characterized in that** one of the boundary surfaces (22, 23) of the receiving chamber (6) is curved and preferably the other boundary surface (22, 23) is formed by the covering layer (21).

3. Microfluidic test carrier according to claim 2, **characterized in that** the curved boundary surface (23) is the cover (25) of the receiving chamber (6).

4. Microfluidic test carrier according to claim 2, **characterized in that** the curved boundary surface (22) is the floor (24) of the receiving chamber (6) and preferably the floor (24) is curved such that the floor (24) is upwardly inclined towards the dam (18) of the receiving chamber (6).

5. Microfluidic test carrier according to any one of the preceding claims, **characterized in that** the test carrier (1) is rotatable about a rotational axis (5) that extends through the test carrier (1), preferably through the center point or the center of gravity of the test carrier (1).

6. Microfluidic test carrier according to the preceding claim, **characterized in that** the receiving chamber (6) is positioned on the test carrier (1) such that the rotational axis (5) extends through the inlet port (7).

7. Microfluidic test carrier according to claim 5, **characterized in that** the receiving chamber (6) is positioned in the test carrier such that the rotational axis (5) extends through the center point or the center of gravity of the receiving chamber (6).

8. Microfluidic test carrier according to claim 5, **characterized in that** the receiving chamber (6) is positioned eccentrically to the center point of the test carrier (1) or to the center of gravity of the test carrier (1).

9. Microfluidic test carrier according to any one of the preceding claims, **characterized in that** the floor (24) of the receiving chamber (6) is dished such that a depression (43) is formed in a collecting region (42) close to the outflow orifice (26), into which depression the fluid flows.

10. Microfluidic test carrier according to any one of the preceding claims, **characterized in that** a preferably conical boss (40) is formed on the floor (24) of the receiving chamber (6), which boss is positioned facing the inlet port (7) in the cover (25) and is preferably aligned with the rotational axis (5).

11. Microfluidic test carrier according to any one of the preceding claims, **characterized in that** a plurality of outflow orifices (26) are positioned in the venting channel (16), which are in fluid connection with a connecting channel (9) each that extends away from the receiving chamber (6), wherein the outflow orifices (26) preferably are equidistantly distributed about the circumference.

12. Microfluidic test carrier according to any one of the preceding claims, **characterized in that** the sample chamber (8, 10, 11) is provided with an outlet orifice (33) that is in fluid connection with an outlet channel (34) such that a fluid can flow out of the sample chamber (8, 10, 11).

13. Microfluidic test carrier according to the preceding claim, **characterized in that** a further fluid chamber (38) with an inlet orifice (39) connects with the outlet channel (34), which is in fluid connection with the sample chamber (8, 10, 11) by means of the outlet channel (34).

14. Microfluidic test carrier according to any one of the preceding claims, **characterized in that** the side wall is provided with an indentation (44), which extends away from the center point of the receiving chamber (6), and **in that** the outflow orifice (26) is arranged in the indentation (44).

## Revendications

1. Support de test microfluidique destiné à répartir une quantité de liquide en quantités partielles, comprenant un substrat (4) et une couche couvrante (21) et une structure capillaire (3) qui est formée dans le substrat (4) et est entourée par le substrat (4) et la couche couvrante (21),
où
la structure capillaire (3) comprend une chambre de réception (6), une chambre d'échantillonnage (8, 10, 11) et un conduit de connexion (9) entre la chambre de réception (6) et la chambre d'échantillonnage (8, 10, 11), la chambre de réception (6) présente deux surfaces limites opposées (22, 23) et une paroi latérale (27), l'une des surfaces limites (22, 23) présentant un orifice d'entrée (7), une des surfaces limites (22) étant le fond (24) de la chambre de réception (6) et l'autre surface limite (23) étant le plafond (25) de la chambre de réception (6),
**caractérisé en ce que**
- la chambre de réception (6) comprend un conduit d'évacuation d'air (16) circonférentiel et un barrage (18) circonférentiel disposé entre la chambre de réception (6) et le conduit d'évacuation d'air (16), dans lequel le barrage (18) est formé par une paroi (19) et forme une paroi latérale du conduit d'évacuation d'air (16) et est disposé plus près de l'entrée (7) que le conduit d'évacuation d'air (16),
- le barrage (18) est conçu de telle sorte que la hauteur de la paroi (19) est inférieure à la hauteur de la paroi latérale radialement extérieure (27) du conduit d'évacuation d'air (16), de sorte qu'une fente (29) est formée entre la couche couvrante (21) du support de test et le côté supérieur (20) de la paroi (19), dont la hauteur de fente est inférieure à la hauteur du conduit d'évacuation d'air (16), de manière à former une butée capillaire sous la forme d'une valve géométrique (28) avec le conduit d'évacuation d'air (16) par laquelle de l'air peut s'échapper du conduit d'évacuation d'air (16),
- le conduit de connexion (9) s'étend entre un orifice de sortie (26) du conduit d'évacuation d'air (16) et un orifice d'entrée (35) de la chambre d'échantillonnage (8, 10, 11) de telle sorte que le liquide peut être transféré de la chambre de réception (6) vers la chambre d'échantillonnage (8, 10, 11), et
- la valve (28) est conçue de manière à empêcher le transfert indépendant de liquide depuis la chambre de réception (6).

2. Support de test microfluidique selon la revendication 1, **caractérisé en ce que** l'une des surfaces limites (22, 23) de la chambre de réception (6) est incurvée et de préférence l'autre surface limite (22, 23) est formée par la couche couvrante (21).

3. Support de test microfluidique selon la revendication 2, **caractérisé en ce que** la surface limite incurvée (23) est le plafond (25) de la chambre de réception (6).

4. Support de test microfluidique selon la revendication 2, **caractérisé en ce que** la surface limite incurvée (22) est le fond (24) de la chambre de réception (6) et **en ce que** le fond (24) est incurvé de préférence de telle manière que le fond (24) monte vers le barrage (18) de la chambre de réception (6).

5. Support de test microfluidique selon l'une des revendications précédentes, **caractérisé en ce que** le support de test (1) peut tourner autour d'un axe de rotation (5) traversant le support de test (1), de préférence à travers le centre ou le centre de gravité du support de test (1).

6. Support de test microfluidique selon la revendication précédente, **caractérisé en ce que** la chambre de réception (6) est disposée sur le support d'échantillon (1) de telle sorte que l'axe de rotation (5) traverse l'orifice d'entrée (7).

7. Support de test microfluidique selon la revendication 5, **caractérisé en ce que** la chambre de réception (6) est disposée dans le support de test de telle sorte que l'axe de rotation (5) traverse le centre ou le centre de gravité de la chambre de réception (6).

8. Support de test microfluidique selon la revendication 5, **caractérisé en ce que** la chambre de réception (6) est disposée de manière excentrique par rapport au centre du support de test (1) ou au centre de gravité du support de test (1).

9. Support de test microfluidique selon l'une des revendications précédentes, **caractérisé en ce que** le fond (24) de la chambre de réception (6) est incurvé de manière à former dans une zone collectrice (42) près de l'orifice de sortie (26) un renfoncement (43) dans laquelle s'écoule du liquide.

10. Support de test microfluidique selon l'une des revendications précédentes, **caractérisé en ce qu'**une élévation (40) de préférence conique est formée dans la chambre de réception (6) sur le fond (24), laquelle élévation (40) est disposée dans le plafond (25) en face de l'orifice d'entrée (7) et est de préférence orientée selon l'axe de rotation (5).

11. Support de test microfluidique selon l'une des revendications précédentes, **caractérisé en ce qu'**une pluralité d'orifices de sortie (26) sont disposés dans le conduit d'évacuation d'air (16), lesquelles orifices de sortie (26) sont en communication fluidique avec un conduit de connexion (9) correspondant qui s'étend à l'écart de la chambre de réception (6), les orifices de sortie (26) étant répartis de préférence à égale distance sur la périphérie.

12. Support de test microfluidique selon l'une des revendications précédentes, **caractérisé en ce que** la chambre d'échantillonnage (8, 10, 11) présente un orifice de sortie (33) qui est en communication fluidique avec un conduit de sortie (34) de manière à ce qu'un liquide puisse s'écouler depuis la chambre d'échantillonnage (8, 10, 11).

13. Support de test microfluidique selon la revendication précédente, **caractérisé en ce qu'**une autre chambre à liquide (38) dotée d'un orifice d'entrée (39), qui est en communication fluidique avec la chambre d'échantillonnage (8, 10, 11) via le conduit de sortie (34), est adjacente au conduit de sortie (34).

14. Support de test microfluidique selon une des revendications précédentes, **caractérisé en ce que** la paroi latérale présente un renflement (44) s'étendant à l'écart du centre de la chambre de réception (6) et l'orifice de sortie (26) est disposé dans le renflement (44).
